Europäisches Patentamt

(19) European Patent Office (11) Publication number: **0 349 142**

Office européen des brevets **A1**

(12) **EUROPEAN PATENT APPLICATION**

(21) Application number: **89305929.5**

(22) Date of filing: **12.06.89**

51 Int. Cl.⁴: **H02K 13/04 , H01R 39/32**

(30) Priority: **28.06.88 GB 8815365**

(43) Date of publication of application:
**03.01.90 Bulletin 90/01**

(84) Designated Contracting States:
**DE ES FR GB IT**

(71) Applicant: **JOHNSON ELECTRIC S.A.**
**125 Rue de Progres**
**La Chaux de Fonds(CH)**

(72) Inventor: **Wang, Patrick Shui-Chung**
**22 Belleview Drive, 10/F**
**Repulse Bay Garden Repulse Bay(HK)**

(74) Representative: **Luckhurst, Anthony Henry**
**William et al**
**MARKS & CLERK 57-60 Lincoln's Inn Fields**
**London WC2A 3LS(GB)**

(54) **An armature.**

(57) An armature comprises a winding, a plurality of commutator segments (16) each having a brush contacting portion (18) and an integral terminal portion (20) which is connected to a connector portion (14) of the winding, a commutator segment support (22), and a separate terminal support (24) having a plurality of housings (26) which are formed with recesses for the terminal portions and slots (38) for positioning the connector portions (14) of the winding relative to the housing recesses. Each terminal portion (20) has a slot (48) which straddles and grips the connector portion (14) and the slots (48) are radially inwardly disposed of the radially outer edge of the brush contacting portions (18) to provide a commutator of reduced profile.

FIG.1.

## An Armature

This invention relates to an armature for an electric motor and to an electric motor equipped with such an armature.

British Patent No. 2128818B discloses an armature having a commutator in which the commutator segments are connected to the armature winding by mechanical connections. Each commutator segment has a terminal portion provided with a slot which straddles and grips an armature winding portion. The slot is narrower than the winding portion and has an open end for receiving the winding portion and two cutting edges for cutting insulation on the winding portion as the winding portion moves into the slot. The terminal portions extend radially outwards from brush contacting portions of respective commutator segments and are located in respective recesses provided in a rose-like terminal support formed integrally with an electrically insulated commutator segment support.

In practice it has been found that the radial extent of the terminal support limits the amount of wire which can be wound onto the arms of a laminated armature stack, because it interferes with the path of the winding head.

In seeking to mitigate this drawback, the invention provides an armature comprising a winding, a plurality of commutator segments each having a brush contacting portion and an integral terminal portion which is connected to a connector portion of the winding, a commutator segment support on which the brush contacting portions of the commutator segments are seated, and a terminal support having a plurality of housings which are respectively formed with housing recesses for said terminal portions and with means for positioning the connector portions of the winding relative to each housing recess, each terminal portion having a slot which straddles and grips the connector portion positioned relative to a respective housing recess, the slots in the terminal portions being radially inwardly disposed of the radially outer edge of the brush contacting portions of respective commutator segments.

With such an arrangement it is possible to minimise the radial extent of the commutator to allow for a better winding fill between the arms of the armature stack.

Other, preferred, aspects and advantages of the invention will be apparent from the following description and the accompanying drawings.

The present will now be more particularly described, by way of example only, with reference to the accompanying drawings, in which:

Figure 1 is an exploded sectional view of part of one embodiment of an armature according to the invention,

Figure 2 is a plan view of one of the commutator segments of Figure 1 in blank form,

Figure 3 is an enlarged view of one portion of the terminal portion of the commutator segment shown in Figure 2,

Figure 4 is a plan view of the terminal support of the armature of Figure 1 and is partially sectioned to illustrate the configuration of one of the housings, and

Figure 5 is a side view of the armature of Figure 1 on a reduced scale.

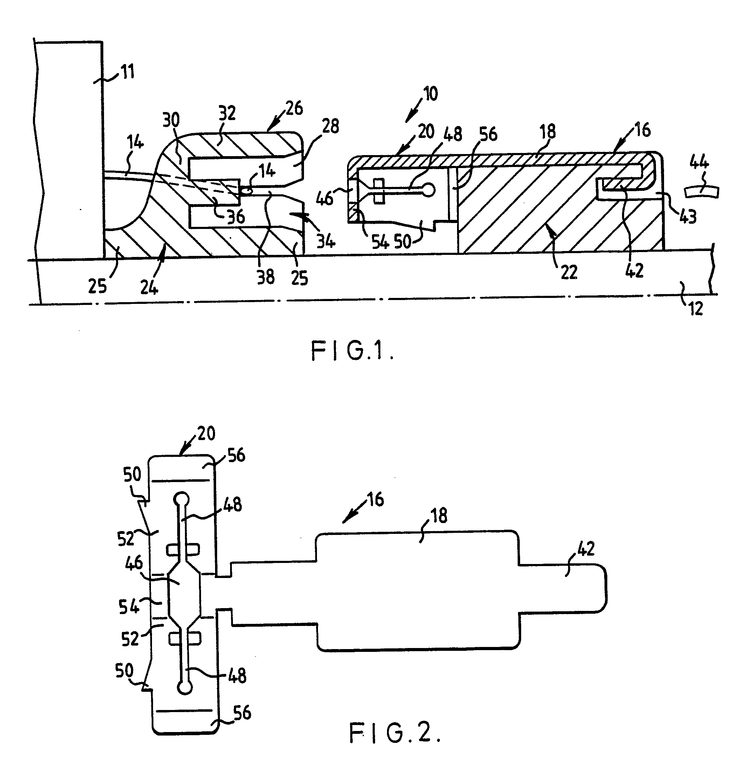

Referring firstly to Figure 1, the armature shown therein comprises a barrel-type commutator 10 mounted on an armature shaft 12, and winding portions 14.

The commutator 10 comprises five commutator segments 16 having brush contacting portions 18 and integral terminal portions 20, a commutator segment support 22 on which the brush contacting portions 18 of the commutator segments 16 are seated, and a rose-like terminal support 24. The terminal support 24 has an inner sleeve 25 and five housings 26 equally spaced around the circumference of the sleeve 25. Each of the housings 26 is used in effecting connection between a respective portion 14 of the armature winding and one of the commutator segments 16.

One of the housings 26 is shown in section in Figure 4. The housing 26 has side walls 28, an end wall 30 and a cover 32. An opening 34 which faces the commutator segment support 22 is provided by the walls 28 and cover 32. The side walls 28 are parallel with the axis of the shaft 12.

A boss 36 projects centrally from the internal surface of the end wall 30 and extends within the housing. 26 for approximately half the length of the side walls 28. The boss 36 extends parallel with the axis of the shaft 12 and is only connected to the terminal support 24 by the end wall 30. Each side wall 28 of the housing 26 has a slot 38 which extends parallel to the axis of the shaft 12, from the commutator end of the housing 26 for a length which terminates at the level of the free end of the boss 36. A portion 14 of the armature winding is passed through the slots 38 of one of the housings 26 and the winding portion 14 rests on the end of the boss 36. The external surfaces of the side walls 28 are bevelled so as to facilitate entry of the winding portion 14 into the slots 38.

Referring now to Figure 2 the commutator segment 16 shown therein in blank form has a lug 42 of reduced width provided at the front end of the brush contacting portion 18 for a purpose which will become apparent later.

The terminal portion 20, which is connected to the rear end of the brush contacting portion 18 is rectangular with its minor axis coincident with the longitudinal axis of the commutator segment 16. The terminal portion 20 has a central cut out portion 46 which is symmetrical with respect to both the major and minor axis of the terminal portion 20. The cut out 46 reduces from its largest width at the centre of the terminal to two keyhole shaped slots 48 which terminate at either end of the cut out 46. A triangular barb 50 is provided on either side of the minor axis of the terminal portion 20 along the edge furthest from the brush contacting portion 18.

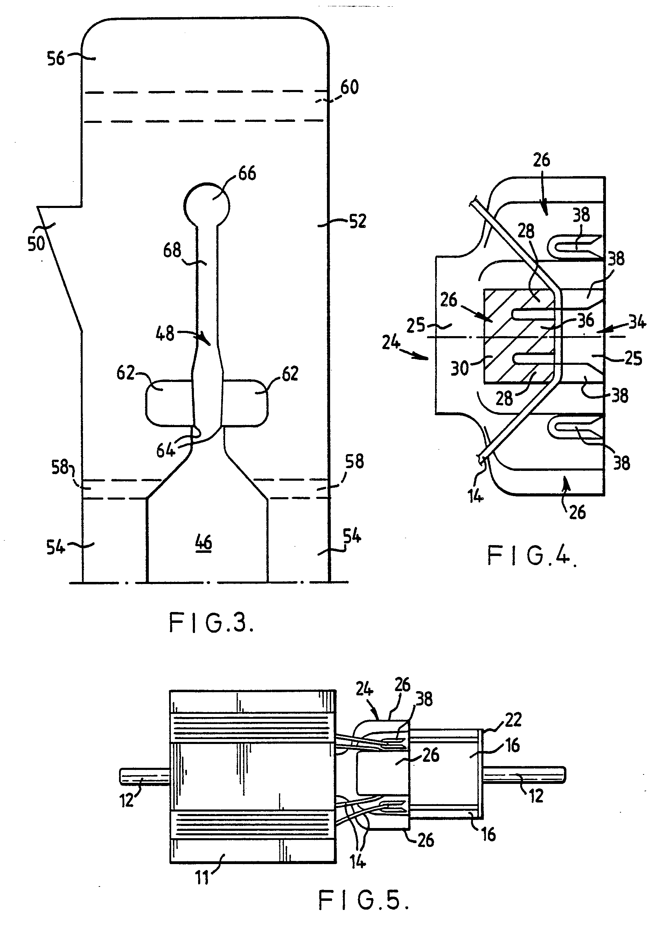

Figure 3 shows one half of the terminal portion 20 of Figure 2, on an enlarged scale. Areas 58 are shown in which bending occurs between a central portion 54 and an arm 52. Area 60 is also indicated in which bending between the arm 52 and an extreme end portion 56 occurs. However, the main purpose of Figure 3 is to illustrate the detailed structure of the keyhole slot 48. It is this feature which ensures contact with the armature winding portion 14. The slot 48 is narrower than the conducting core of winding portions 14 and the reduction in size from the centre of the cut out portion 46 to the start of the keyhole slot 48 provides a funnel for guiding the arm 52 onto the winding portion 14. A short distance into the keyhole slot 48 there are located two cutters 62 which have sharp edges 64 projecting into the slot 48. The cutters 62 are formed from the arm 52 but are partially severed therefrom such that the sharp edges 64 are resiliently urged into the slot 48. Along the slot 48, behind the cutters 62, there is a further small reduction in width. Circular end 66 of slot 48 ensures that the edges of the slot 48 have a certain resilience to separation by the armature winding 14.

Description will now be given of the assembly of an electric motor incorporating the present invention.

The terminal support 24 is placed on the armature shaft 12 with the inner sleeve 25 against the base of a conventional lamination stack 11. The lead wire of the armature winding is inserted into the housing 26 by laying the end of the wire 14 in the slots 38 provided in the side walls 28 of the housing 26. The wire 14 is drawn back into the housing 26 until it rests against the boss 36. From this start, the first armature coil is wound. At the end of the first coil winding the armature is indexed and the wire 14 is layed in the same manner in the next housing 26 without breaking the continuity of the wire 14.

This process is repeated until all coils have been wound and the tail end of the winding is then laid in the slots 38 of the first housing 26 and pushed back until it is adjacent to the lead end which was placed against the boss 36 at the beginning of the winding operation. The wire 14 is then cut and the armature removed from the winding machine.

The body 10 now has a winding portion 14 comprising insulated wire laying in each of the housings 26.

Each of the winding portions 14 is under tension and is pulled tight against the respective boss 36.

The commutator segments 16 are prepared ready for mounting on the support 22. The commutator segments 16 are provided in blank form as shown in Figure 2. The brush contacting portion 18 of each commutator segment 16 is of part cylindrical form which conforms to the external radius of the commutator segment support 22. Terminal portion 20 is bent downwards from the commutator segment 16 and the arms 52 of the terminal portion 20, which include the respective keyhole slots 48, are bent at 90° to the central portion 54. The arms 52 therefore extend parallel to each other and to the longitudinal axis of the commutator segment 16, and forward along the rearside of the commutator segment 16. The free ends 56 of the terminal portion 20 are bent so as to be inclined towards each other when the arms 52 have been bent parallel to each other.

The commutator segments 16 are placed on the support 22 in spaced angular relationship with the terminal portions 20 lying against or closely adjacent to one end of the support 22 and the brush contacting portions 18 on the circumferential surface of the support 22. The lugs 42 are then bent over and forced into respective longitudinal recesses 43 provided in the other end of the support 22. Wedges 44 are then forced into the recesses to secure the lugs 42 in position.

The support 22 is then placed on the armature shaft 12 and moved towards the terminal support 24. As the terminal portions 20 enter the housings 26 the central portions 54 of the terminal portions 20 pass over the bosses 36 and the slots 48 move over the wire 14. The sharp edges 64 of the cutters 62 sever the insulation on the wire 14 and further entry of the terminal portion 20 forces the wire 14 into the narrow portions 68 of the slots 48. Intimate metal to metal contact is thereby provided between the wire 14 and the terminal portions 20.

The barbs 50 grip the covers 32 of the housings 26 and therefore retain the terminal portions 20 in the housings 26.

The arms 52 of each terminal portion 20 act as double cantilever springs and exert a continuous pressure on the wire 14.

The invention provides a simple and cheap connection between the armature winding and the commutator. No application of heat is required and the associated risk of distorting the supports 22 and 24 is therefore avoided. No embrittlement of the winding wire is caused and problems associated with oxidation are also avoided. The use of flux is negated and there is no chemical reaction or consequent corrosion resulting from the connection. The armature winding is a single continuous winding and the danger of introducing slack by breaking the winding to effect a connection to each coil is completely avoided. Consequently, the danger of the armature winding being fretted when the motor is in operation, is reduced. It should also be noted that the commutator segments are introduced after the winding of the armature has been completed and therefore the danger of the wire being accidently stripped by abrasion on metal components during winding is very greatly reduced. Moreover, since the radial extent of the terminal portions and rose-like terminal support is small a good winding fill between the adjacent arms of the lamination stack can be achieved. Furthermore, the commutator segment support and the rose-like terminal support can be made from different materials each adapted to the function which it has to perform. Finally, the commutator segments can be pre-assembled on the commutator segment support at a location remote from the assembly line for the armature.

The above embodiment is given by way of example only and various modifications will be apparent to persons skilled in the art without departing from the scope of the invention defined by the appended claims. For example, the cutters could be omitted and the winding portions in the housings could be pre-stripped of insulation.

## Claims

1. An armature comprising a winding, a plurality of commutator segments (16) each having a brush contacting portion (18) and an integral terminal portion (20) which is connected to a connector portion (14) of the winding, a commutator segment support (22) on which the brush contacting portions (18) of the commutator segments (16) are seated, and a separate terminal support (24) having a plurality of housings (26) which are respectively formed with housing recesses for said terminal portions (20) and with means (36, 38) for positioning the connector portions (14) of the winding relative to each housing recess, each terminal portion (20) having a slot (48) which straddles and grips the connector portion (14) positioned relative to a respective housing recess, characterised in that the slots (48) in the terminal portions (20) are radially inwardly disposed of the radially outer edge of the brush contacting portions (18) of respective commutator segments (16).

2. An armature as claimed in claim 1, characterised in that the brush contacting portions (18) of the commutator segments (16) are part cylindrical and the terminal portion (20) of each commutator segment (16) is radially inwardly disposed of its respective brush contacting portion (18).

3. An armature as claimed in claim 1 or claim 2, characterised in that theterminal portions (20) lie against or closely adjacent to one end of the commutator segment support (22).

4. An armature as claimed in claim 1, claim 2, or claim 3, characterised in that the commutator segment support (22), the terminal support (26), the commutator segments (16) and the connector portions (14) of the winding are arranged so that the brush contacting portions (16) of the commutator segments (18) can be seated on the commutator segment support (22) and the terminal portions (20) can then connect with the connector portions (14) of the winding with a single translational movement of the commutator segment support (22) and commutator segments (16) parallel to the axes of the slots (48) in the terminal portions (20).

5. An armature as claimed in any one of claims 1 to 4, characterised in that each terminal portion (20) has two cutting edges (64) for cutting insulation on said connector portion (14) as the connector portion (14) enters the slot (48).

6. An armature as claimed in any one of the preceding claims, characterised in that each terminal portion (20) is provided with a barb (50) for retaining said connector portion (20) in said housing recess.

7. An armature as claimed in any one of the preceding claims, characterised in that each terminal portion (20) has two parallel arms (52), each arm (52) being provided with a slot (48) which straddles and grips the connector portion (14).

8. An armature as claimed in any one of the preceding claims, characterised in that the commutator segment support (22) and the terminal support (24) are of different materials.

9. An electric motor equipped with an armature as defined in any one of the preceding claims.

F I G.1.

F I G.2.

FIG.3.

FIG.4.

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 271 175 (JOHNSON ELECTRIC INDUSTRIAL MANUFACTORY LTD.) * column 2, lines 12-37; column 3, line 58 - column 4, line 14; figure 5 * | 1-9 | H 02 K 13/04 H 01 R 39/32 |
| P,A | EP-A-0 282 670 (JOHNSON ELECTRIC INDUSTRIAL MANUFACTORY LTD.) * abstract * | 1-9 | |
| A | EP-A-0 106 444 (JOHNSON ELECTRIC INDUSTRIAL MANUFACTORY LTD.) & GB - B - 2128818 (Cat. D) | | |

TECHNICAL FIELDS SEARCHED (Int. Cl.5)

H 02 K 13/00
H 01 R 39/00

The present search report has been drawn up for all claims

| Place of search | Date of completion of the search | Examiner |
|---|---|---|
| BERLIN | 11-09-1989 | LEOUFFRE M. |